# EUROPEAN PATENT SPECIFICATION

(11) **EP 0 812 811 B1**
(45) Date of publication and mention of the grant of the patent: **09.04.2003**
(21) Application number: 97500026.6
(22) Date of filing: 04.02.1997
(51) Int. Cl.: C04B 7/32

(54) **Hydraulic cement with an accelerated development of high strength**
Hydraulischer Zement mit beschleunigter hoher Festigkeitsentwicklung
Ciment hydraulique à développement de haute résistance accélérée

(30) Priority: 10.06.1996 MX 9602271
(43) Date of publication of application: 17.12.1997
(73) Proprietor: CEMEX, S.A. DE C.V., 64000 Monterrey, Nuevo Leon (MX)
(72) Inventor: Poo Ulibarri, Ramon, Garza Garcia, 66230, Nuevo Léon (MX); Lopez Gonzalez, Waltter, Monterrey, 64060, Nuevo Léon (MX); Villafana Torres, José Sacramento, S. Nicolas d. l. Garza, 66460 Nuevo Léon (MX)
(74) Representative: Davila Baz, Angel

(56) References cited:
- WO-A-89/04815
- DE-A- 4 227 815
- DE-B- 1 302 478
- FR-A- 2 186 442
- US-A- 3 251 701
- US-A- 4 957 556
- CHEMICAL ABSTRACTS, vol. 105, no. 14, 6 October 1986 Columbus, Ohio, US; abstract no. 119706m, T.A. ATAKUZIEV ET AL.: page 302; XP002041126 & SU 1 244 121 A (ID.)
- CHEMICAL ABSTRACTS, vol. 109, no. 10, 5 September 1988 Columbus, Ohio, US; abstract no. 78698x, X. LI, ET AL: page 340; XP000019927 & CN 103 649 A (ID.) 9 December 1987

## Description

### FIELD OF THE INVENTION

The invention object of the present application relates to the production of cements which, in short times, develop high predictable strength, more specifically the invention provides a method for the production of such cements as well as the cement itself.

### BACKGROUND OF THE INVENTION

Hydraulic cements are known to be constituted by materials composed by oxides and defined chemical compounds belonging to the inorganic chemistry, the use of which is based upon the chemical reaction of said oxides and other constituents of the cement with water, thus forming hydrated compounds which agglutinate with each other, resulting in a mass which, faster or slower, develops mechanical strength. There are cements of the kind mentioned previously in the market, encompassed within the general term "hydraulic cements", which are capable of developing mechanical strength very rapidly, and which are widely known as "high alumina cements".

Said high alumina cements are constituted essentially by calcium aluminate of formula CaO.Al₂O₃ and smaller quantities of calcium aluminoferrite 4CaO.Al₂O₃.Fe₂O₃ as well as traces of another calcium aluminate of formula 12CaO.7Al₂O₃.

The invention object of this application has no relation with high alumina cements, but it does with cements based upon the calcium sulfoaluminate compound of formula 4CaO.3Al₂O₃.SO₃.

The earliest mention to cements based upon calcium sulfoaluminate was made in a French patent, issued in the year 1936, to the company Poliet et Chausson of Paris, the invention of which originated from the research of Henry Lossier, thus being cements based on the calcium sulfoaluminate compound known up to this date as Lossier cements.

By the year 1941 the aforementioned French company manufactured on demand "expansive cements with no contraction", produced from a clinker obtained by the burning of a mixture of the appropriate composition, formed by gypsum, ferruginous bauxite and limestone.

In 1958, in the United States, Klein presented a work at the seventy-first Annual Meeting of the ASTM in which he established that a compound that was not precisely identified, but which seemed to correspond with an anhydrous calcium sulfoaluminate, was the reason for the behavior of these expansive cements. Virtually since that time, said expansive cements, based upon calcium sulfoaluminate, are known as K cements by the ASTM, and are governed by specification C-845: expansive hydraulic cements.

The expansive cements mentioned earlier were manufactured in a more or less empirical manner until, during the Fifth International Congress on Cement Chemistry, held in Tokyo in the year 1968, the works of several authors coincided in pointing out that the main component of these cements is constituted by calcium sulfoaluminate of formula 4CaO.3Al₂O₃.SO₃.

According to the teachings of the prior art for the obtention of said expansive cements, the calcium sulfoaluminate based clinker was mixed with Portland clinker as well as with granulated blast-furnace slag, so as to obtain a "controlled expansion" product. Since that time cement researchers realized that cements based upon a calcium sulfoaluminate clinker produced early strength cements, greater than those obtained by the sole use of Portland cement, as is clearly established in the United States Patent No. 4,957,556 of Hassan Kunbargi.

In relation to the invention by Kunbargi and according to the teachings derived from it, it is virtually impossible to accurately determine the setting of the cement by the Vicat method, as said setting is extremely fast, which greatly increases the difficulty in handling the concrete produced with this cement, even and although the use of citric acid is recommended as a setting retardant.

Another problem presented by the cement produced according to Kunbargi's patent is that the development of strength by the same is unpredictable and, even though in some cases the offered compressive strengths are obtained, frequently much smaller strengths are obtained. This problem, of course, basically derives from the materials which constitute Kumbargi cement as defined in the respective United States Patent.

Also in relation to Kumbargi's patent, in its columns 3 and 4, the fact is emphasized that calcium sulfoaluminate is not thermodynamically stable and that it decomposes when heated in an industrial kiln at temperatures above 1200 °C.

On the other hand, in said Kumbargi patent, column 5, it is clearly established that due to the thermodynamic properties of calcium sulfoaluminate, it is extremely difficult, if not impossible, that the clinker resulting from the burning of the raw materials involved in the production of the cement, may contain calcium sulfoaluminate, tricalcium silicate and dicalcium silicate, reason for which it is established in said patent that it is necessary to mix a hydraulic clinker which contains tricalcium silicate and dicalcium silicate with the clinker produced in said manner.

Finally, in relation to the Kumbargi patent, it is doubted that the compressive strengths mentioned therein are real, particularly under the assumption that by the use of the ASTM-C-109 method or the EN196-1 method, the latter being the standard of the European Community, the value of said strengths are not obtained, without clearly establishing the real value of said strengths, as in the context of the patent in question, the strength of the cement produced by the Kumbargi method is compared against the strength of Portland cement.

Going even further into the problem of the measurement of the strength developed by Kumbargi cement, the method employed for the determination of the different setting ages of the cement is not exactly clear, allowing the belief that such measurements are equivalent to those performed with respect to Portland cements, announcing them in any case as equivalent, which in fact is no so, as the value of the mechanical strength of any type of hydraulic cement is not an absolute value as could be the case of the specific weight or the chemical composition, considering that the values of said strength depend, basically, upon the method employed for its assessment. In the case of hydraulic cement the mechanical strength is a function of the water : cement ratio as well as of the cement : sand ratio, and when any of said ratios is changed, the results between the different measurement methods are not comparable.

According to the ASTM method, the cement : sand ratio is 1:2.75 and the water : cement ratio is about 0.49 for Portland cements. In the case of the Kumbargi patent, a 1:1 cement : sand ratio is used, and, of course, the water : cement ratio employed is not clear, however, it is a fact that Kumbargi cement presents far greater strengths than those obtained by Portland cements, but the determinations carried out according to the ASTM method are not comparable.

### OBJECTIVES OF THE INVENTION

It is therefore a main objective of the invention to obtain a cement, based on calcium sulfoaluminate, in the manufacturing process of which the raw materials are clinkered at temperatures above 1200 °C, without this resulting in a reduction in the content of calcium sulfoaluminate in the clinker due to the decomposition of the same.

It is another objective of the invention to obtain a cement based on calcium sulfoaluminate containing, apart from an adequate amount of calcium sulfoaluminate, dicalcium silicate and tricalcium silicate, thus eliminating the need, according to Kunbargi's teachings, of having to mix the sulfoaluminous clinker with a hydraulic clinker which contains tricalcium silicate and dicalcium silicate.

It is yet another objective of the invention to produce a clinker, by the use of a clinkering kiln fitted with a preheater and a precalciner, in the composition of which calcium sulfoaluminate, tricalcium silicate and dicalcium silicate are present, as well as other components in smaller amounts, as the result of a single burning operation in an industrial kiln.

It is yet an additional objective of the present invention to provide a method for the preparation of a calcium sulfoaluminate based cement with improved handling characteristics and rapid development of strength, all as a result of the composition of the clinker to which, as a previous or simultaneous step to the grinding, other components are introduced, thus obtaining a cement with very high and rapid strengths, with a better setting time and particularly, with the guarantee that the strengths which develop will always remain within the preset control parameters.

As a summary of the advantages provided by the invention object of this application, the following can be mentioned:
a) a clinker is produced which was impossible to produce according to the prior art.
b) the total chemical composition of the clinker produced allows that it may conveniently activated by other components during a further grinding process,
c) by means of the process for the obtention of the cement of the invention, it is possible to produce, in a totally controlled and predictable manner, a cement which rapidly develops very high mechanical strengths.
d) the cement object of the present application exhibits characteristics such as to permit the elaboration of concrete pavements which can be opened to heavy truck traffic no more than 8 hours after its construction. This application can be clearly extended to the laying of landing courses, repair of bridges or concrete structures, these application being only listed for the purpose of illustration and not limitation.

In aid of simplicity in writing, throughout the description of the invention object of the present application, abbreviated notations will be employed for the chemical compounds, which are widely employed commonly, worldwide, in the cement industry:
S will serve to identify SiO₂,
A for Al₂O₃
F for Fe₂O₃
C for CaO
M for MgO
$\overline{\text{S}}$ for SO₃
N for Na₂O
K for K₂O and
H for H₂O

### SUMMARY OF THE DESCRIPTION

As mentioned earlier, the invention of this application consists in the obtention of a clinker resulting from the burning of the raw materials which form the cement, the chemical composition of which had not been possible to obtain industrially. Said composition consists fundamentally of a high content in calcium sulfoaluminate 4CaO.3Al₂O₃.SO₃, tricalcium silicate 3CaO.SiO₂ and dicalcium silicate 2CaO.SiO₂, adding, during the grinding stage, to said clinker, optimum amounts of calcium oxide or hydroxide (limestone or hydrated limestone) and some of the different forms of calcium sulfate, natural, produced industrially or as an industrial by-product. The addition of the latter ingredients brings about the activation of the clinker.

The addition of the previously mentioned ingredients can, of course, be carried out prior to the grinding or throughout the same, providing the sulfoaluminous clinker, the lime or hydrated lime and the calcium sulfate of the necessary fineness to be employed as a cement with the essential characteristics of the same, namely, the development of high strengths in very short times.

As raw materials for the production of the clinker, any type of material of the kind normally used in the production of calcium sulfoaluminate based cements can be employed, which, when dosed adequately, provide the adequate chemical composition to the mixture, which, prior to grinding, will be fed into an industrial kiln, of the kind usually known in the cement industry, for its burning at a temperature above 1200°C. This produces a sulfoaluminate clinker as part of the process for the obtention of the cement of the invention.

As an example of the raw materials which can be used are those which are usually employed in the production of Portland cement, such as limestone, shale, calcareous material, and any of the natural forms of calcium sulfate, such as gypsum or anhydrite; different types of clay such as kaolin and alumites and any of the different types of bauxite, if it were necessary.

It is also possible to use raw materials which are the result of industrial processes, such as wastes, with the only limitation of complying with the requirements in relation to environmental law. Hence, it is possible to use gypsum obtained as a by-product of some industrial process, such as phosphogypsum, which is marginally obtained in the industrial production of phosphoric acid.

The amounts of raw material used in the making of the clinker are subject to the condition that, after their burning at temperatures above 1200 °C, the following percentages will be complied with:
1.- The calculated amount of calcium sulfoaluminate will be comprised preferably between 20 and 40% of the total weight of the cement composition.
2.- The calculated amount of dicalcium silicate shall be comprised preferably between 10 and 30%.
3.- The calculated amount of tricalcium silicate shall necessarily always be of at least 1%, but it will preferably be comprised between 10 and 30%.
4.- The calculated amount of anhydrite CaSO₄, shall be of at least 1%.
5.- In no case shall the content of combined lime in the clinker, calculated as total lime minus free lime, give rise to C3S values departing those specified in point three.
6. The content in free lime will preferably be below 0.5%, but it shall in no case be as high as to exceed what is stated in points 3 and 5.

According to the teachings of the invention, the coexistence of calcium sulfoaluminate and tricalcium and dicalcium silicates in the clinker produced is extremely important. Therefore, it is necessary that the temperature in the hottest area of the kiln exceeds 1200°C, and that the combination reaction of the calcium oxide with the other oxides be as complete as possible, this means that the control of the operation of the kiln is carried out by determining the amount of calcium oxide which remains uncombined, being such compound known as free lime in the cement industry. In order to analytically determine the amount of calcium oxide which remains uncombined, the most recommended method is that described in ASTM-C114: Chemical Analysis of Hydraulic Cement. This determination method allows a precise control of the operation of the kiln, ensuring that the chemical reactions that take place in the inside the kiln are carried out in the desired manner, thus guaranteeing the formation of the predetermined amounts of calcium sulfoaluminate and dicalcium and tricalcium silicates.

Once the clinker has been produced, the optimum amounts of calcium hydroxide and calcium sulfate to be added to the clinker during the grinding process, will have to be determined in the laboratory, so as to obtain the desired compressive strengths.

The dosing of the calcium hydroxide and calcium sulfate to the clinker may be carried out, as mentioned earlier, prior to or during the grinding of the materials to a predetermined fineness, being it possible to employ as calcium sulfate any of the several forms which exist of this compound, with the only condition that the temperature within the mill is such that the cement attains a temperature of approximately between 100 and 125 °C during the grinding, and that the retention time in said mill will be sufficiently long to convert gypsum CaSO₄.2H₂O into the hemihydrate 2CaSO₄.2H₂O, thus ensuring that the calcium sulfate present in the cement will be in a condition to react rapidly during the hydration of cement, and that the same develops the desired strength.

The presence of calcium hydroxide added prior to or during the grinding of the cement, as well as the fact that calcium sulfate is found in the composition of the cement in the form of the hemihydrate are teachings which are totally unknown in the description and claims of the Kunbargi patent, this being the main reason for which the calcium sulfoaluminate based cement consistently develops the rapid strengths which are sought and for which the setting time is more retarded, which facilitates the use of the concrete.

### DETAILED DESCRIPTION OF THE INVENTION

As it has already been established in the previous text, the invention object of this claim is particularly related to the controlled industrial production of a calcium sulfoaluminate based cement, which develops in a predictable manner very high strengths in a short time.

For informative purposes it is pointed out that the cements of the prior art, based upon calcium sulfoaluminate, were classified exclusively as a function of their expansive properties and that in the invention which we are dealing with, this expansive characteristic is not relevant.

Also in the way of clarification, attention is drawn to the fact that when mention is made to a solution, reference is being made to the paste which results from adding water to cement, in which certain substances are dissolved as a result of the hydration reactions of the cement.

Essentially, the rapid development of strength in the cement of the invention is based particularly upon the formation of the chemical compound, so called Ettringite, the formula of which is C3A.3CaSO₄.32H₂O, the conditions for the formation of which will be described in detail in the description of the invention which will be given subsequently, and which is the result of the chemical reaction between calcium sulfoaluminate, calcium sulfate and calcium hydroxide when the cements becomes hydrated.

It is of vital importance, as derived from the teachings of the invention, that the Ettringite is produced from the very beginning of the hydration of the cement, thus being essential for the same that the necessary amounts of calcium ions Ca²⁺, sulfate ions SO₄²⁻ and hydroxyl ions OH⁻ are present in solution. Said amounts must be sufficient to produce an oversaturation of the respective ions in the solution which forms the cement paste, the calcium and sulfate ions react with the calcium sulfoaluminate to form Ettringite and the hydroxyl ions will maintain a pH above 12, which permits the formation of ettringite.

Some of the restrictions placed upon the composition of the clinker, and which are established as derived from the present invention, are derived from what has been previously mentioned briefly, and can be summarized as follows:
1.- All the aluminium oxide present in the clinker must be found in the form of sulfoaluminate, in order to guarantee the maximum formation of Etringite in the shortest possible time, starting from a single compound during the hydration of the cement, by the development of a single chemical reaction. If there was tricalcium aluminate in the clinker, Etringite could still be formed, derived from the reaction between tricalcium aluminate and calcium sulfate, but this would change both the reaction velocity and the chemical equilibrium, as there would be two compounds competing simultaneously, at a different velocity, for the sulfate ion.
2.- in order to ensure that all the aluminium oxide present in the clinker is found in the form of sulfoaluminate, a slight excess of SO₃ must be provided, that is, there must be a minimum amount of anhydrite, therefore, all the SO₃ which may react with the aluminium oxide will form sulfoaluminate. If there is an excess of aluminium oxide, due to a sulfate ion deficiency, tricalcium aluminate will be formed, the presence of which compound is undesirable in the cement, as was explained in the previous paragraph.
3. - With the object of ensuring that the formation of Ettringite takes place rapidly, it is necessary to maintain a highly alkaline medium, i.e. at a pH of at least 12 or above, which is guaranteed by the presence of OH⁻ ions originating from the addition to the cement of hydrated lime during or before grinding. Additionally, the calcium ions also present due to the addition of hydrated lime help maintain the oversaturation of calcium ions, necessary for the rapid formation of Ettringite.
   The presence of free lime in the clinker provides an additional supply in the amount of calcium ions present in the solution of hydration of the cement, and is equally a factor in maintaining a high pH level in the same, but the speed at which it will get into solution depends upon a number of factors, for example the burning temperature of the clinker takes the calcium oxide to a lower state of reactivity (lime burnt to death) than that of properly burnt lime. In the clinker the free lime granules are of different sizes, and are generally surrounded by the rest of the chemical compounds which form part of the clinker. Hence their availability to react is not immediate. In fact, it is not exactly known at what speed and at what time the residual free lime in the clinker will start reacting, this being the reason for establishing that the residual free lime in the clinker (calcium oxide) must remain at a minimum level, that is, at a value below 0.5%. In this way the formation of the maximum possible amount of dicalcium and tricalcium silicate is also ensured.
4.- if as a result of burning the value of free lime exceeds 0.5%, this factor must be corrected during the clinker activation tests, avoiding in any case the excess in free lime as derived from what is described in the previous paragraph, as an excess in free lime can lead to the occurrence of the following additional problems:
   a) An undesirable and uncontrolled expansion might take place during hydration of the cement, which would be the result of the hydration and untimely reaction of said free lime. In case of the latter taking place, the formation of Ettringite would be delayed, occasioning such delay the destructive expansion of the cement.
   b) The calculation of the compounds , may lead to a negative value for tricalcium silicate, with the subsequent alteration in the conditions of the chemical equilibrium which one desires to obtain with the specific chemical composition of the invention, making that the cement produced will tend to fall within the specification and behavior problems of Kunbargi cements. Hence, due to the problems analyzed above, the free lime shall not exceed a value such as to obtain a negative tricalcium silicate.

Apart from the characteristics described previously in relation to the chemical composition of the clinker, it is very important that the operational conditions of the kiln are adequate to obtain the formation of the desired compounds, within the quantity parameters determined. In relation to the operational parameters of the kiln, the temperature which the material attains in the warmest area of the same, shall be above 1200°C, and shall preferably be between 1200°C and 1500°C.

An additional operational characteristic of the kiln is that it will have to be operated in such a way that the material remains at the maximum temperature the necessary time to ensure that the resulting free lime content in the clinker is below 0.5%. The chemical composition of the clinker produced shall be determined following any method of chemical analysis used in the cement industry, for example by X-ray fluorescence, however, in case of discrepancy among results, the method to be used shall be that described in ASTM-C-114: Chemical Analysis of Hydraulic Cement. For the determination of free lime content during the operation of the kiln, the recommended, and most convenient, analytical method is that described in ASTM-C114: Chemical Analysis of Hydraulic Cement-94, section 27.
1.- The chemical analysis expressed in percentages by mass shall be expressed in moles, for which purpose the percentage of each oxide is divided by its molecular weight:

| | |
|---|---|
| Moles of silicon oxide | SiO₂=%SiO₂/60.07 |
| Moles of aluminium oxide | Al₂O₃=%Al₂O₃/101.96 |
| Moles of ferric oxide | Fe₂O₃=%Fe₂O₃/159.69 |
| Moles of total calcium oxide | CaO₍ₜ₎=%CaO₍ₜ₎/56.08 |
| Moles of free calcium oxide | CaO₍ₓ₎=%CaO₍ₓ₎/56.08 |
| Moles of sulfur trioxide | SO₃=%SO₃/80.06 |

2.- From the total content of moles of calcium oxide, CaO₍ₜ₎, the content in moles of free calcium oxide, CaO₍ₓ₎, will be subtracted. This value shall be considered as the combined calcium oxide CaO_{(c)}.
3.- It is considered that all the content in aluminium oxide, Al₂O₃, is found combined as calcium sulfoaluminate 4CaO.3Al₂O₃.SO₃.
4.- The moles of SO₃ and CaO which are found forming calcium sulfoaluminate, 4CaO.3Al₂O₃.SO₃, are calculated:
moles of SO₃ combined in the sulfoaluminate: SO₃= moles Al₂O₃/3
moles of CaO combined in the sulfoaluminate: CaO(1)= moles Al₂O₃*(4/3)

5.- The content of calcium sulfoaluminate, in moles, in the clinker shall be equal to the number of moles of SO₃ in the calcium sulfoaluminate.
6.- The content of anhydrite, CaSO₄, in the clinker will be equal to the excess in moles of SO₃: moles of anhydrite: CaSO₄ = total moles of SO₃ - SO₃ in calcium sulfoaluminate. CaO in anhydrite = CaO(2) = moles of SO₃ in anhydrite.
7.- All the Fe₂O₃ shall be considered as 2CaO.Fe₂O₃.
8.- Calculate the CaO necessary to form the 2CaO.Fe₂O₃: moles of CaO in 2CaO.Fe₂O₃: CaO(3)= moles of Fe₂O₃*2.
9.- Calculate the moles of calcium oxide which remain uncombined at this moment: moles of CaO which remain uncombined: CaO(4)= CaO(c)-CaO(1)- CaO(2)- CaO(3).
10.- Calculate the molar ratio CaO(4) / SiO₂. If this ratio is smaller than 2, the clinker departs from specifications. End of the calculation.
11. The calcium oxide found as C2S will be: CaO(5)= moles of SiO₂*2.
12.- The content in moles of C3S will be: CaO(4) minus CaO in C2S: moles of C3S= CaO(4)-CaO(5).
13.- The content of C2S will equal the total content of moles of SiO₂ minus the moles of C3S.
14.- Finally, to transform the results of the calculation of compounds into percentages by mass, the value obtained for each compound shall be multiplied by its molecular weight: percentage of calcium sulfoaluminate. 4CaO.3Al₂O₃.SO₃, moles of 4CaO.3Al₂O₃.SO₃ x 610.26. Percentage of anhydrite, CaSO₄, moles of CaSO₄ x 136.14. Percentage of calcium ferrite, 2CaO.Fe₂O₃, moles of 2CaO.Fe₂O₃ x 271.85. Percentage of tricalcium silicate, C3S, moles of C3S x 228.3. Percentage of dicalcium silicate, C2S, moles of C2S x 172.23.

The coexistence within the clinker, at the output of the kiln, of both calcium sulfoaluminate and of dicalcium and tricalcium silicates, can be determined by several different analytical methods, for example, by optical microscopy or by scanning electron microscopy. The coexistence of the previously mentioned compounds can also be checked by x-ray diffraction, notwithstanding, although any of these methods can be used as a complementary control, their use is not essential for process control, which will have to be focused upon the control of the free lime by the previously mentioned analytical method.

It is recommended that the chemical composition of the clinker be controlled from the point of the grinding of the raw materials, carefully controlling the composition of the crude powder, stage of the process during which the proportioning of the different materials, such as limestone or shale, clays, kaolin, bauxite, gypsum, etc., is carried out, this being the usual way of controlling the composition of the clinker in the cement industry.

It is obvious that there is no problem in using, in the production of clinker, different materials which result as industrial wastes or by-products from other industries, for instance, it is possible to use sand from foundry molds, phosphogypsum, etc. The method for the grinding of the raw material can be carried out by any procedure of those normally employed in the cement industry, i.e. by means of ball mills, tube mills, roller-presses or some combinations thereof.

The kiln employed in the production of the clinker can also be of any type usually employed for the production of clinker for Portland cement. For example, it is possible to use, without any restrictions, straight kilns, kilns with a preheater of any of the different types of cyclone or grate, kilns with a preheater and a preburner, etc. Equally, any of the different systems in existence for the cooling of the clinker, which are common in the cement industry, may be used during the unloading of the kiln. One may mention, for instance, grate or planetary coolers.

Once the clinker has been produced it shall have to be assessed and assayed in the laboratory by means of activation tests by the addition of calcium oxide or hydroxide and some form of calcium sulfate. The clinker produced industrially shall not necessarily result, when ground to any fineness, in a cement capable of rapidly developing high strengths, generally this is not the case.

The rapid development of high strengths will result from the adequate composition of the clinker, but also from the adequate chemical composition of the cement so as to allow the rapid formation of etringite crystals, the formation of which will take place by means of the reaction of calcium sulfoaluminate with calcium hydroxide and calcium sulfate.

Contrary to what was established by Collepardi and Turriziani in 1972, this reaction will depend upon the concentration of SO₃²⁻ and OH⁻ ions in the solution (the term solution stands for the paste formed by the addition of water to the cement). The time of formation of Ettringite crystals will depend upon the near immediate availability of these ions in the solution, and, hence, so will also the development of high strengths, it is for this reason that an adequate dosification of Ca(OH)2 is important, without thus having to depend upon the appearance of this compound as a function of the free lime or of the generation of, Ca(OH)2 from the hydration of C3S, as proposed by Kunbargi in his patent No. 4,957,556, the reaction velocity for which purpose is virtually impossible to calculate or predict.

Something similar happens with the presence of SO₃²⁻ ions in the solution, the behavior of which is mistakenly evaluated in laboratory tests by the direct addition of gypsum to the clinker, without taking into account the real behavior of these materials in the industrial practice, as it is a common practice to calculate, in the laboratory, the presence of SO₃²⁻ ions as derivatives of gypsum and not as hemihydrate.

During industrial grinding, the temperature of the materials in the grinding circuit must be raised to temperatures between 100 and 130 °C. Under these temperature conditions, the gypsum CaSO₄.2H₂O loses one and a half molecules of water and becomes the hemihydrate: 2CaSO₄H₂O, whose solubilization and SO₃ saturation equilibrium velocities are different from those of gypsum and anhydrite, this being the reason for the inadequate dosification of the amount of SO₃, being it necessary to add gypsum to the clinker in order to optimize the development of its strength, as a consequence of which, according to the previous art, unpredictable results are obtained.

Laboratory activation tests, prior to grinding, will consequently be carried out on a sample of clinker which is representative of the lot to be ground, on a sample gypsum which is representative of the lot to be used and which has been kept, for at least 24 h, in a laboratory oven at 120 °C, verifying by means of differential thermal analysis, thermogravimetry and X-ray diffraction, its transformation into the hemihydrate 2CaSO₄H₂O, and also on a representative sample of the lot of hydrated lime which will be used in the grinding. The materials mentioned previously will be previously ground to a fineness similar to that to which one expects to produce the cement, this fineness being expressed as the percentage of cement particles with a size under 45 microns.

Once the materials have been fully identified, one shall proceed to determine the optimum content in hydrated lime and hemihydrate that shall be dosed into the clinker for its activation. Mixtures of the clinker and hemihydrate are prepared varying the content in SO₃ added, for example, 3%, 5%, 7% SO₃, subsequently dosifying, for each of the mixtures, increasing amounts of hydrated lime, starting from, for instance, 1% and with 1% increments, as in this case the variation in the content of lime is critical. Thus, the following series of samples will be obtained, identified as follows:
1.- +3%SO₃ and 1,2,3,4,5 and 6% hydrated lime
2.- +5%SO₃ and 1,2,3,4,5 and 6% hydrated lime, etc.

One shall proceed to determine the compressive strength of each of the samples by the method ASTM-C109 - Standard Test Method for Compressive Strength of Hydraulic Cement Mortars, only taking into consideration that the water to cement ratio shall be adjusted by the use of the fluidity table and not by the constant water to cement ratio specified for Portland cements. The strengths developed can be verified at the ages which are considered convenient, for example, one and a half hours, three hours, etc, after the water for mixing was added. Following this method it is easy to relate with the strengths which, at the same age, would be developed by a reference hydraulic cement, such as for example, a Portland cement.

As example of the compressive strengths which can be obtained by following the teachings of the present invention, the following table is presented in which the strengths of Portland cement are also shown.

| Age | High Strength Cement MPA Compressive Strength | Type I Portland Cement (MPA) Compressive Strength |
|---|---|---|
| 1.5 hours | 5.0 | Note 1 |
| 3.0 hours | 7.5 | Note 1 |
| 5.0 hours | 10.0 | Note 2 |
| 24.0 hours | 20.0 | 10.0 |

Note 1: The mortar cubes do not maintain their shape when removed from the mould and hence they could not even be subjected to the compression test.

Note 2: Although the cubes maintained their shape when removed from the mould, these collapsed as soon as pressure was applied. It is not possible to measure any strength.

All the compressive strength results in the previous table are expressed in MPA (Megapascals) and have been obtained by the ASTM-C-109 method: Standard Test Method for Compressive Strength of Hydraulic Cement Mortars.

As with other sulfoaluminate based cements, it is possible to delay the setting of the cement of the invention by the use of organic products such as citric acid, as described in the previously mentioned article by Collepardi and Turriziani.

Based upon the studies carried out by the inventors of the hydration reactions of cement, it has been concluded that the rapid development of strength in the cement of the invention is caused by the formation of Ettringite crystals, which are present from the very moment that the addition of water is commenced. The rapid development of strength by the cement is attributed exclusively to this compound, as dicalcium and tricalcium silicates initially only act as stabilizers of the main reaction, as a consequence of their slow input of Ca²⁺ ions to the solution, helping in this manner to stabilize a high pH value, which, as mentioned earlier, is essential for the development of the main reaction. Said dicalcium and tricalcium silicates do subsequently contribute in a slower and more gradual manner, to the development of mechanical strength, all due to their slower hydration reaction.

There is agreement with what was established by Collepardi and Turriziani in that the main reaction is: C4A3S + 6Ca(OH)₂ + 8 CaSO₄.2H₂O + 74 H₂O = 3(C3A.3CS.32H₂O).

Notwithstanding, they defended that the provision of Ca(OH)₂ is due to the hydration of the calcium silicates, reaction which, as mentioned previously, takes place very slowly, thus being it necessary to have a more direct supply of Ca(OH)₂, leading to the obtention of the rapid strengths exhibited by the calcium sulfoaluminate based cements of the invention, which they were never able to obtain.

On the other hand, it is possible to follow the hydration reactions of the cement object of the present application by means of techniques which are common to the study of the hydration reactions of other hydraulic cements, being it possible to consult the appropriate bibliography in relation to said techniques, hence it has been considered unnecessary to include them here.

Some aspects of this monitoring by an X-ray diffraction technique will be described next.

The monitoring of the reaction must be commenced one minute after the beginning of the same, due to the putting together of the water and the cement. The lines which identify the presence of etringite begin to become defined in the diffraction pattern from said first moment. With the passage of time, said lines will increase and become more defined, whereas on the contrary, the lines corresponding to calcium sulfoaluminate will decrease in intensity.

For the purposes of the present invention, the optimum composition of the invention will be such that apart from presenting Ettringite lines from the first minute and regularly increase in intensity thereafter, the lines which identify calcium sulfoaluminate shall decrease regularly in intensity and disappear completely after 24 hours of the beginning of the hydration reactions, which indicates the total formation of Ettringite from calcium sulfoaluminate. It is obvious that the real behavior of the cement may differ slightly from what has been described herein, but in essence it should be very similar.

In relation to the latter it shall be clearly noted that what was expressed by Kunbargi differs completely from what has been exposed above, as in his patent he established that the rapid strength developed by sulfoaluminate based cements was due to the reaction of calcium aluminate, as it occurs in the case of high alumina cements. There is no calcium aluminate present in calcium sulfoaluminate based cements, moreover, provisions are made in the present invention for the quantification of the composition of the cement, in order to prevent the presence of any of the possible compositions of calcium aluminate, C3A, C12A7, etc.

## Claims

1. A method of producing a calcium sulfoaluminate-containing cement clinker, comprising subjecting a mixture of cement raw materials, to calcining temperatures sufficiently above 1200 °C to assure the consistent coexistent formation of dicalcium silicate and tricalcium silicate in an industrial kiln; said kiln having a preheater; said raw materials being sources of CaO, SiO₂, Al₂O₃ and SO₃ and being mixed so as to obtain clinker having a content of 20% to 40% of calcium sulfoaluminate, 10% to 30% of dicalcium silicate, at least 1% of tricalcium silicate, at least 1% of anhydrite so as to assure the suppresion of the presence of any aluminate apart from calcium sulfoaluminate, and less than 0.5% of free calcium oxide, all porcentages being based on the total weight of said clinker obtained.

2. The method of producing cement clinker according to claim 1, wherein the content of tricalcium silicate is from 10 to 30%.

3. The method of producing cement clinker according to any of claims 1 and 2, wherein the calcining temperature is between 1200 °C and 1500 °C.

4. The method of producing cement clinker according to any of claims 1 to 3, wherein said industrial kiln has a precalciner.

5. The method of producing cement from clinker made according to any of claims 1 to 4, further comprising activating said clinker obtained by addition of an amount of about 1% to 6% of calcium oxide or hydroxide and/or about 3% to 7 % of calcium sulfate, the later percentage being in terms of SO₃ present, and subjecting the resulting mixture to grinding, having a significant percentage of particles smaller than 45 µm and maintaining a grinding temperature sufficient to effectively achieve the hemihydrate phase of calcium sulfate.

6. The method of producing cement according to claim 5, wherein the grinding temperature is maintained between 100°C and 130°C.

7. The method of producing cement according to any of claims 5 and 6, wherein said clinker activation through the addition of calcium oxide or hydroxide is carried out prior or during the grinding step of said mixture.

8. The method of producing cement clinker according to any of claims 5 to 7, wherein the mixture of cement raw materials is selected from the group consisting of limestone, calcium sulfate and clays.

9. A calcium sulfoaluminate-containing cement, produced by the method of any of claims 5 to 8, wherein said cement upon hydration has a pH higher than 12 and develops a compressive strength of about 10 MPa within a period of about 5 hours due to the formation of ettringite when said calcium sulfoaluminate reacts with calcium and sulfate ions.

## Patentansprüche

1. Verfahren zur Herstellung von Calciumsulfoaluminat enthaltendem Zementklinker, bei dem ein Gemisch eines Zementrohmaterials bei einer Kalzinierungstemperatur von hinreichend über 1200°C behandelt wird, um die konsistente koexistierende Bildung von Dicalciumsilikat und Tricalciumsilicat in einem industriellen Brennofen zu gewährleisten, der einen Vorheizer aufweist, wobei die Rohmaterialien Quellen von CaO, SiO₂, Al₂O₃ und SO₃ sind und gemischt werden, um Klinker zu erhalten, die einen Gehalt von 20% bis 40% Calciumsulfoaluminat, 10% bis 30% Dicalciumsilicat, wenigstens 1% Tricalciumsilicat, wenigstens 1 % Anhydrit, um die Anwesenheit von jeglichem Aluminat außer von Calciumsulfoaluminat zu unterdrücken, und von weniger als 0,5% freiem Calciumoxid aufweisen, wobei alle Prozentangaben auf dem Gesamtgewicht des erhaltenen Klinkers basieren.

2. Verfahren zur Herstellung von Zementklinker nach Anspruch 1, wobei der Gehalt an Tricalciumsilicat zwischen 10 und 30 % beträgt.

3. Verfahren zur Herstellung von Zementklinker nach einem der Ansprüche 1 oder 2, wobei die Kalzinierungstemperatur zwischen 1200°C und 1500°C beträgt.

4. Verfahren zur Herstellung von Zementklinker gemäß einem der Ansprüche 1 bis 3, wobei der Brennofen einen Prekalzinierer aufweist.

5. Verfahren zur Herstellung von Zement aus gemäß einem der Ansprüche 1 bis 4 hergestelltem Klinker, das zusätzlich die Aktivierung des erhaltenen Klinkers durch Zusatz einer Menge von etwa 1% bis 6 % Calciumoxid oder -hydroxid und/oder etwa 3% bis 7 % Calciumsulfat umfaßt, die letztgenannte Prozentangabe im Sinne von vorhandenem SO₃, und das resultierende Gemisch gemahlen wird, wobei ein wesentlicher Prozentsatz von Partikeln kleiner als 45 µm ist und eine hinreichende Mahltemperatur aufrechterhalten wird, um wirksam die Hemihydrat-Phase von Calciumsulfat zu erhalten.

6. Verfahren zur Herstellung von Zement gemäß Anspruch 5, wobei die Mahltemperatur zwischen 100°C und 130°C gehalten wird.

7. Verfahren zur Herstellung von Zement nach einem der Ansprüche 5 oder 6, wobei die Aktivierung des Klinkers durch den Zusatz von Calciumoxid oder -hydroxid vor oder während des Mahlschrittes des Gemisches erfolgt.

8. Verfahren zur Herstellung von Zementklinker gemäß einem der Ansprüche 5 bis 7, wobei das Gemisch des Zementrohmaterials aus der aus Kalkstein, Calciumsulfat und Ton bestehenden Gruppe ausgewählt wird.

9. Calciumsulfoaluminat enthaltender Zement, hergestellt nach einem Verfahren der Ansprüche 5 bis 8, wobei der Zement nach der Hydratation einen pH-Wert über 12 aufweist und eine Druckfestigkeit von etwa 10 MPa innerhalb einer Zeitdauer von etwa 5 Stunden infolge der Bildung von Ettringit entwickelt, wenn das Calciumsulfoaluminat mit Calcium- und Sulfationen reagiert.

## Revendications

1. Procédé de production d'un clinker contenant du sulfoaluminate de calcium, comprenant les étapes consistant à soumettre un mélange de matériaux bruts de ciment à des températures de calcination suffisamment supérieures à 1200 °C pour permettre la formation coexistante conséquente de silicate bicalcique et de silicate tricalcique dans un four industriel ; ledit four étant équippé d'un réchauffeur ; lesdits matériaux bruts étant des sources de CaO, SiO₂, Al₂O₃ et SO₃ et étant mélangés de façon à obtenir un clinker avec une teneur en sulfoaluminate de calcium comprise entre 20% et 40% , une teneur en silicate bicalcique comprise entre 10% et 30% , une teneur en silicate tricalcique d'au moins 1%, une teneur en anhydrite d'au moins 1% de façon à permettre la suppression de tout aluminate présent à l'exception du sulfoaluminate de calcium, et une teneur en oxyde de calcium libre de moins de 0,5%, tous les pourcentages étant basés sur le poids total dudit clinker obtenu.

2. Procédé de production d'un clinker selon la revendication 1, dans lequel la teneur en silicate tricalcique est comprise entre 10% et 30%.

3. Procédé de production d'un clinker selon l'une quelconque des revendications 1 et 2, dans lequel la température de calcination est comprise entre 1200 °C et 1500 °C.

4. Procédé de production d'un clinker selon l'une quelconque des revendications 1 à 3, dans lequel ledit four industriel est équipé d'un four de précalcinage.

5. Procédé de production d'un ciment à partir du clinker obtenu selon l'une quelconque des revendications 1 à 4, comprenant en outre les étapes consistant à activer ledit clinker obtenu par addition d'une quantité d'environ 1% à 6% d'oxyde ou hydroxyde de calcium et/ou environ 3% à 7% de sulfate de calcium, ce dernier pourcentage étant exprimé en termes de présence en SO₃, et à soumettre le mélange obtenu au broyage, avec un pourcentage significatif de particules dont la taille est inférieure à 45 µm et à maintenir une température de broyage suffisante pour réaliser de manière efficace la phase semi-hydrate du sulfate de calcium.

6. Procédé de production d'un ciment selon la revendication 5, dans lequel la température de broyage est maintenue entre 100 °C et 130 °C.

7. Procédé de production d'un ciment selon l'une quelconque des revendications 5 et 6, dans lequel ladite activation du clinker est réalisée par ajout d'oxyde ou d'hydroxyde de calcium avant ou pendant l'étape de broyage dudit mélange.

8. Procédé de production d'un clinker selon l'une quelconque des revendications 5 à 7, dans lequel le mélange de matériaux bruts de ciment est choisi dans le groupe comprenant du calcaire, du sulfate de calcium et de l'argile.

9. Ciment contenant du sulfoaluminate de calcium, produit par le procédé de l'une quelconque des revendications 5 à 8, dans lequel ledit ciment a un pH supérieur à 12 par hydratation et développe une résistance à la compression d'environ 10 Mpa en une période d'environ 5 heures en raison de la formation d'ettringites lorsque ledit sulfoaluminate de calcium fait réagir les ions de calcium et de sulfate.
